# EUROPÄISCHE PATENTANMELDUNG

(11) **EP 3 287 178 A1**
(43) Veröffentlichungstag der Anmeldung: **28.02.2018**
(21) Anmeldenummer: 17192087.9
(22) Anmeldetag: 10.04.2012
(51) Int. Cl.: B01D 24/00, B01D 39/16

(54) **FILTERMATERIAL ZUM REINIGEN EINES FLUIDS**

(30) Priorität: 11.04.2011 DE 102011016689; 10.10.2011 DE 202011106515 U
(62) Teilanmeldung aus: 12002552.3
(71) Anmelder: Dari GmbH, 92318 Neumarkt (DE)
(72) Erfinder: Richter, Andreas, 92318 Neumarkt/OPf. (DE)
(74) Vertreter: Wittmann, Günther

(57) **Zusammenfassung**

Die Erfindung offenbart einen Filter zum nahezu drucklosen Filtrieren eines Fluids mit einem in einem Gehäuse angeordneten Filtermedium, aufweisend einen Einlass für unreines Fluid am Gehäuse und einen Auslass für gereinigtes Fluid am Gehäuse, wobei das Filtermedium eine Vielzahl von Filterkörpern umfasst,
- wobei jeder der Filterkörper ein Filtermaterial aufweist, das aus einer Vielzahl synthetischer Fasern gebildet ist, wobei die fasereigene Haftung durch eine mechanische Behandlung verstärkt wird, wodurch das Material eine erhöhte Festigkeit erhält, und
- die geometrische Form des Filterkörpers zumindest näherungsweise einem Rotationskörper entspricht;
- dadurch gekennzeichnet, dass die Vielzahl von Filterkörpern als Schüttgut in dem Filtergehäuse angeordnet sind.

## Beschreibung

Die Erfindung betrifft ein Filtermaterial zum Reinigen eines Fluids, gebildet aus einer Vielzahl synthetischer Fasern zum Filtern eines. Darüber hinaus betrifft die Erfindung einen aus dem Filtermaterial hergestellten Filterkörper sowie einen Filter zum Reinigen eines Fluids und ein Verfahren zum Betrieb eines solchen Filters.

Unter Vlies versteht man ein aus Fasern hergestelltes, textiles Gebilde. Ein Vlies besteht dabei aus lose zusammenliegenden Fasern, die nicht weiter miteinander verbunden sind. Bevor Vlies verarbeitet bzw. benutzt werden kann, muß es daher verfestigt werden. Hierzu sind dem Fachmann mechanische und thermische Verfahren bekannt. Ein verfestigtes Vlies wird dann als Vliesstoff bezeichnet.

Wenn in der Vergangenheit Vlies als Filtermaterial verwendet wurde, so handelte es sich ebenfalls um verfestigtes Vlies, also Vliesstoff. Ein derartiger Vliesstoff arbeitete als eine Art "zweidimensionaler" Filter. An der Oberfläche des Vliesstoffes lagerten sich Fremdteile, wie z. B. Schmutzpartikel, ab. In der Folge bildeten sich Filterkuchen. Der Filter setzte sich zu und eine hohe Pumpleistung war erforderlich, um den Filterbetrieb über einen längeren Zeitraum aufrechtzuerhalten. Hierfür waren, besonders bei großen Mengen des zu filternden Fluids, wie beispielsweise bei industriellen Anwendungen oder in Schwimmbädern, teure Hochleistungspumpen erforderlich.

Das bei aus dem Stand der Technik bekannten Lösungen in einem Filter eingesetzte Filtermedium ist als einteiliger Filterblock zumeist zylinderförmig oder quaderförmig ausgeführt. Dabei wird in der Regel in Lagen angeordneten Faservlies verwendet. Die Handhabung eines solchen Filtermediums ist zumeist umständlich. Zudem ist die Filterleistung oftmals unzureichend und/oder das Filtermedium muß oft ausgetauscht werden.

Eine Aufgabe der vorliegenden Erfindung ist es, das Filtern eines Fluids deutlich zu vereinfachen und/oder zu verbessern. Diese Aufgabe wird durch die in den Hauptansprüchen angegebenen Erfindungsgegenstände gelöst. Vorteilhafte Ausführungen der Erfindung sind in den Unteransprüchen angegeben.

Unter Fluid wird dabei insbesondere eine Flüssigkeit bzw. eine wäßrige Suspension verstanden. Die Erfindung ist aber auch für das Filtern von Gasen anwendbar.

Mögliche Anwendungen der Erfindung umfassen u. a. das Reinigen von Wasser in Schwimmbädern und Whirlpools und dergleichen, das Reinigen von Abwasser, beispielsweise in kommunalen Kläranlagen, und das Reinigen von Flüssigkeiten bzw. Suspensionen bei der Lebensmittelherstellung, beispielsweise bei der Herstellung von Bier. Weitere Anwendungen der Erfindung umfassen die Reinigung von Gasen, insbesondere im industriellen Maßstab, beispielsweise können einem Gas Staubteilchen entzogen werden.

Die im Folgenden im Zusammenhang mit den Verfahren erläuterten Vorteile und Ausgestaltungen gelten sinngemäß auch für die erfindungsgemäßen Vorrichtungen und umgekehrt.

Ein Aspekt der Erfindung betrifft das als Filtermedium in einem Filter verwendete Filtermaterial und dessen Eigenschaften.

Eine erste Idee der Erfindung ist es, als Filtermaterial nicht mehr verfestigen Vliesstoff zu verwenden. Statt dessen wird ein im wesentlichen unverfestigter Vliesstoff verwendet. In Ergänzung der herkömmlichen Terminologie, in der "Vlies" zur Bezeichnung eines unverfestigten Fasergebildes und "Vliesstoff" zur Bezeichnung eines verfestigen Vlieses dient, wird erfindungsgemäß ein "unverfestigter Vliesstoff" vorgeschlagen. Das Filtermaterial besteht mit anderen Worten noch aus lose zusammenliegenden Fasern, die noch nicht in dem Maße miteinander verbunden sind, wie dies bei herkömmlichem Vliesstoff der Fall ist. Insbesondere erfolgt keine thermische Verfestigung. Auch eine mechanische Verfestigung im herkömmlichen Sinn erfolgt nicht. Statt dessen erfolgt eine mechanische Behandlung des Materials derart, daß im Ergebnis eine dynamische Fixierung der Fasern vorliegt. Die Festigkeit des Vlies bzw. des Filtermaterials beruht anders ausgedrückt im wesentlichen nach wie vor nur auf der fasereigenen Haftung, insbesondere auf einer Reibschlußbindung sowie einer Formschlußbindung der Fasern. Diese fasereigene Haftung wird jedoch durch die mechanische Behandlung verstärkt, wodurch das Material eine erhöhte Festigkeit aufweist. Eine aerodynamische Vliesbildung findet dabei nicht statt.

Eine weitere Idee der Erfindung ist es, wie weiter unten näher beschrieben, die fasereigene Haftung durch ein Aufrauhen der Oberfläche der Fasern (z. B. durch Kardieren) zu erhöhen, ohne daß es sich bei dem aus diesen Fasern hergestellten Vliesstoff dann um ein verfestigtes Vlies im traditionellen Sinn handelt.

Der erfindungsgemäße Vliesstoff weist insbesondere keine Klebemittel oder andere mechanische Bindemittel auf, wie Drähte oder ähnliches. Der Vliesstoff beruht auf einer rein kohäsiven Bindung der verwendeten Fasern. Es erfolgt keine adhäsive Verfestigung.

Der verwendete Vliesstoff weist vorzugsweise eine sehr geringe Dichte von etwa 10 bis etwa 100 Gramm pro Liter (0,01 kg/l ≤ ρ 0,1 kg/l) auf. Unterhalb von 10 Gramm sind die Fasern zu weit voneinander beanstandet, so daß die gewünschte Filterwirkung nicht eintritt. Besonders vorteilhaft ist eine Dichte von etwa 17 bis etwa 30 Gramm pro Liter. Als ganz besonders vorteilhaft hat sich eine Dichte von etwa 18 bis etwa 25 Gramm pro Liter erwiesen.

Durch die geringe Dichte entsteht ein "offenes" Filtermaterial mit hoher Porosität, das es erlaubt, daß sich die Schmutzpartikel über den gesamten Filter verteilen. Im Ergebnis wirkt der neuartige Vliesstoff somit als "dreidimensionaler" Filter. Eine Filterkuchenbildung und ein damit verbundenes Zusetzen des Filters wird effektiv vermieden.

Nur einen sehr geringen Prozentsatz des Gesamtvolumens des Filtermaterials nehmen dabei die Fasern des Vliesstoffes bzw. des Filtermaterials ein. So beträgt der Anteil an dem Gesamtvolumen des Filtermaterials bei einer Dichte von 0,02 kg/l beispielsweise nur etwa ein bis zwei Prozent. Die verbleibenden 98 bis 99 Prozent des Volumens stehen als Durchtrittsraum für das zu reinigende Fluid zur Verfügung. Bei einer Dichte von 0,1 kg/l beträgt der Anteil der Fasern des Vliesstoffes bzw. des Filterkörpers an dem Gesamtvolumen des Filtermaterials beispielsweise nur etwa zehn Prozent, so daß die verbleibenden 90 Prozent des Volumens als Durchtrittsraum für das zu reinigen Fluid zur Verfügung stehen. In einem Ausführungsbeispiel der Erfindung beträgt der Anteil der Fasern an dem Gesamtvolumen des Vliesstoffes zwischen 1,3 und 1,4 Prozent. Dennoch weist der erfindungsgemäße Vliesstoff eine im wesentlichen gleichmäßige Festigkeit (MD/CD-Verhältnis) in alle Richtungen auf und läßt sich daher unabhängig von einer bestimmten Anordnung oder Orientierung beliebig in Filtern einsetzen.

Der erfindungsgemäße Vliesstoff wird vorzugsweise aus thermoplastischen Fasern hergestellt. Dabei handelt es sich nicht um Filamente, also Fasern mit praktisch unbegrenzter Länge, sondern um definiert endliche Fasern mit einer typischen Länge von einigen Zentimetern. Vorzugsweise beträgt die durchschnittliche Länge der verwendeten Fasern zwischen 20 mm und 150 mm. Die Verwendung von Polymeren und insbesondere von Polyester hat sich dabei aufgrund ihrer besonderen Eignung zur Filterung von Flüssigkeiten bzw. wäßrigen Suspensionen bewährt. Grundsätzlich kann die längenbezogene Masse der verwendeten Fasern zwischen Null und 10 tex (0-100 dtex) liegen. Vorteilhafterweise liegen die längenbezogenen Massen in einem Bereich von etwa 1,7 bis 45 dtex. Als besonders geeignet haben sich Fasern erwiesen, die gegenüber herkömmlicher Filterwatte, welche eine längenbezogene Masse von etwa 15 bis 17 dtex aufweist, einen etwa doppelt so großen Querschnitt aufweisen. Vorzugsweise liegt die längenbezogene Masse der verwendeten Fasern zwischen etwa 25 und höchstens 45 dtex. Besonders vorteilhaft ist die Verwendung von Fasern mit einer längenbezogenen Masse zwischen etwa 25 und etwa 40 dtex. Mit derartigen Fasern lassen sich mit Hilfe der vorliegenden Erfindung beste Ergebnisse bei der Filterung von Partikeln erreichen, deren Größe in einem weiten Bereich zwischen etwa 5 µm und 3000 µm liegt.

Trotzdem der Durchmesser der Fasern damit gegenüber herkömmlicher Filterwatte deutlich vergrößert ist, ist dennoch eine deutlich verbesserte, vorzugsweise etwa zehnfach so feine mechanische Filterung möglich, so daß Schmutzpartikel mit einer Korngröße bis etwa 5 µm in dem Faservlies eingefangen und damit aus dem zu reinigenden Fluid herausgefiltert werden können. Schon bei einem einmaligen Durchlauf des Filters wird beispielsweise bei wäßrigen Suspensionen eine Filtrationsquote von mindestens 98 Prozent erreicht. Beispielsweise weist das am Auslaß des Filters austretende gereinigte Fluid einen Trübungswert von höchstens 2 auf, wenn das am Einlaß eintretende unreine Fluid einen Trübungswert von 100 aufweist. In einem Ausführungsbeispiel der Erfindung ist die Filtrationsquote besser als 99,5 Prozent, wobei ein Trübungswert unter 0,5 erreicht wird.

Mit einer Filterwirkung bis ca. 5 µm bewegt sich der vorgeschlagene Filter bereits in der Nähe des biologischen Bereiches. Der vorgeschlagene Filter eignet sich damit beispielsweise als Vorfilter oder Ersatz für Filter mit kohlenstoffhaltigen Filtriermitteln.

Ein Filtermedium bestehend aus dem erfindungsgemäßen Filtermaterial kann zum Gebrauch in einem Filter grundsätzlich jede beliebige geometrische Form aufweisen, also beispielsweise zylinderförmig oder quaderförmig ausgeführt sein. Wird das Filtermaterial als blockförmiges, einstückiges Filtermedium verwendet, welches das Filtergehäuse ausfüllt, ist die Dichte des Filtermaterials vorzugsweise über den gesamten Filter im wesentlichen gleichbleibend. Das Vorhandensein verschiedener Filterzonen ist nicht notwendig.

Bei diesen klassischen, blockförmigen Filtermedien hat es sich zum Erhalt des "dreidimensionalen" Filtereffekts als vorteilhaft erwiesen, wenn ein wenigstens 30 mm starker Vliesstoff des erfindungsgemäßen Filtermaterials als Filtermedium verwendet wird. Mit anderen Worten beträgt die Wirkungstiefe, d.h. der Strömungsweg durch das Filtermedium, vorzugsweise mindestens 30 mm. Nach oben sind der Wirkungstiefe des Filtermediums keine Grenzen gesetzt. Unter dem Aspekt eines möglichst geringen Betriebsdrucks ist jedoch eine Wirkungstiefe von maximal 100 cm sinnvoll.

Ein weiterer Aspekt der Erfindung betrifft die Form der aus dem Filtermaterial hergestellten Filterkörper, die als Filtermedium in einem Filter verwendet werden.

Eine Idee der Erfindung ist es, Filterkörper zu verwenden, deren geometrische Form zumindest näherungsweise einem Rotationskörper entspricht. Die Filterkörper sind dabei vorzugsweise entweder zumindest näherungsweise zylinderförmig oder zumindest näherungsweise ellipsoid, insbesondere zumindest näherungsweise kugelförmig.

Mit anderen Worten wird vorgeschlagen, als Filtermedium nicht mehr einen beliebig wirr oder in definierten Lagen angeordneten Faservlies zu verwenden. Statt dessen soll das Filtermedium aus einer Vielzahl von Filterkörpern bestehen, die jeweils, zumindest näherungsweise, die Form eines Rotationskörpers aufweisen.

Durch diese spezielle definierte Form der Filterkörper ist das Filtermedium im Vergleich zu allen anderen aus dem Stand der Technik bekannten Lösungen deutlich einfacher handhabbar. Da die Filterkörper wie Schüttgut gehandhabt werden können, ist nicht nur das Befüllen und Entleeren des Filtergehäuses, sondern auch der Transport des Filtermediums mit weniger Aufwand durchführbar. Insbesondere beim Befüllen des Filtergehäuses zeigt sich dieser Vorteil in einer besonders guten Dosierbarkeit des Filtermediums.

Zudem ist die mit einem solchen Filtermedium erzielbare Filterwirkung, verglichen mit herkömmlichen, insbesondere blockförmigen, Filtermedien, deutlich verbessert.

Darüber hinaus zeichnet sich ein aus dem erfindungsgemäßen Filterkörpern bestehendes Filtermedium auch durch eine besonders gute Rückspülbarkeit aus. Anders als beim Einsatz von Vlieslagen, deren die wirksame Querschnittsfläche des Filtergehäuses zumeist vollständig abdeckende Oberfläche sich meist rasch mit Partikeln zusetzt und daher vergleichsweise schlecht rückspülbar ist, lagern sich die Partikel bei den erfindungsgemäßen Filterkörpern sowohl im Körperinneren (Kern), als auch an der Oberfläche (Hülle) an und die im Betrieb zwischen den einzelnen Filterkörpern bestehenden unregelmäßig angeordneten Zwischenräume ermöglichen nicht nur eine vergleichsweise gute Zufuhr des Rückspülmediums zum Lösen der Partikel aus dem Faservlies, sondern gewährleisten auch einen verbesserten Ablauf zum Fortschwemmen der Partikel aus dem Filtermedium.

Von Vorteil ist darüber hinaus, daß die erfindungsgemäßen Filterkörper bei Bedarf waschbar sind, wobei deren Form aufgrund der fasereigenen Haftung, insbesondere einer Reibschluß-Bindung sowie einer Formschlußbindung der Fasern, erhalten bleibt.

Die genannten Vorteile werden verstärkt, wenn die Filterkörper als Rotationsellipsoide ausgebildet sind, wobei es sich um gestreckte (verlängerte) oder gestauchte (abgeplattete) Rotationsellipsoide handeln kann. Wird als Spezialform eines Rotationsellipsoiden eine Kugelform gewählt, lassen sich besonders hohe Packungsdichten erzielen, was sich zum einen vorteilhaft auf die Filterwirkung und zum anderen ebenso vorteilhaft auf die Rückspülbarkeit auswirkt.

Die erfindungsgemäßen Filterkörper bestehen vorzugsweise aus dem oben beschriebenen Filtermaterial, das ein aus einer Vielzahl synthetischer Fasern gebildetes Faservlies umfaßt, wobei die fasereigene Haftung durch eine mechanische Behandlung verstärkt wurde. Vorzugsweise liegt die längenbezogene Masse der für die erfindungsgemäßen Formkörper verwendeten Fasern dabei zwischen etwa 1,7 und 45 dtex.

Ist das für die Filterkörper verwendete Material sortenrein, wird also nur ein einziges Material verwendet, beispielsweise ein Polyester, so hat dies gegenüber Materialmischungen den Vorteil, daß dauerhaft ein hoher Bausch vorhanden ist. Durch Feuchtigkeit verursachte Probleme, wie sie beispielsweise bei einer Mischung mit Polypropylen auftreten, werden dadurch vermieden. Darüber hinaus ist es von Vorteil, daß sortenreine Filterkörper sehr einfach recyclebar sind.

Es ist von Vorteil, wenn die erfindungsgemäßen Filterkörper Zonen unterschiedlicher Dichte aufweisen, dies vorzugsweise ohne den bevorzugten Bereich der durchschnittlichen Dichte von beispielsweise etwa 18 bis etwa 25 Gramm pro Liter zu verlassen. Sind Zonen unterschiedlicher Dichte vorgesehen, dann weisen die Filterkörper einen Kern mit einer höheren Dichte auf, der von einer Hülle mit einer geringeren Dichte umgeben ist. Dies kann beispielsweise dadurch erreicht werden, daß bei der Herstellung der Körper der Kern fester gewickelt ist, als die Hülle. Bei einer solchen Ausführung der Filterkörper übt der Kern nicht nur eine Stützfunktion aus, die zur Folge hat, daß die Form des Körpers vor, während und nach dem Filtrationsbetrieb (z. B. beim Waschen der Filterkörper) besser erhalten bleibt. Es ergibt sich auch eine bessere Kapillarwirkung, aufgrund der die Schmutzpartikel in das Innere der Filterkörper hineingezogen werden. Die Partikel werden darüber hinaus im Kern deutlich besser festgehalten, so daß sich insgesamt eine sehr gute Filterwirkung ergibt.

Nachfolgend werden Ausführungsbeispiele der Erfindung beschrieben. Dabei wird zunächst auf den Aspekt des Filtermaterials und dessen Eigenschaften eingegangen.

Damit das Faservlies trotz seiner geringen Dichte eine derart gute Filterwirkung bereitstellt, werden in einer bevorzugten Ausführungsform der Erfindung gewöhnliche Polyesterfasern mit einer längenbezogenen Masse von etwa 25 bis 45 dtex durch Kardieren behandelt. Querschnitt und Form der verwendeten Fasern stimmen dabei mit denen von Standardfasern überein. Durch das Kardieren werden die losen Fasern zu einem Vlies ausgerichtet. Die verwendete Kardiervorrichtung ist derart eingerichtet, daß sich Querschnitt und Form der Fasern durch das Kardieren ändern.

Die Kardiervorrichtung ist dabei derart ausgebildet, daß die Oberflächen der Fasern aufgerauht werden. Durch das Einbringen von Kerben in die Faseroberfläche wird nicht nur das Faservolumen, sondern auch die Porosität der Fasern erhöht. Es bilden sich an der Faseroberfläche eine Vielzahl kleiner Taschen. Im Ergebnis wird das aus diesen Fasern erzeugte Vlies voluminöser und weist gegenüber Standard-Faservlies die gewünschte geringere Dichte auf. Das Kardieren kann dabei während der eigentlichen Vliesherstellung oder aber in einem vorgelagerten Behandlungsschritt, mit anderen Worten also während einer Vorbehandlung der Fasern, erfolgen. Das Aufrauhen der Faseroberflächen kann alternativ zu der Verwendung einer Kardiervorrichtung jedoch auch durch andere mechanische oder nichtmechanische Verfahren erfolgen.

Im Anschluß an das Kardieren wird das Material dubliert. Die Dubliervorrichtung ist dabei derart eingerichtet, daß aus dem zuvor längsorientierten Faservlies ein kreuzorientiertes Vlies entsteht.

Anschließend wird dieses Kreuzlagenvlies kalandriert. Die Kalandriervorrichtung ist dabei derart eingerichtet, daß das Vlies auf ein Volumengewicht von etwa 17 bis etwa 30 Gramm pro Liter, vorzugsweise etwa 18 bis etwa 25 Gramm pro Liter kalandriert wird. Durch ein derartiges Kalandrieren kommt es zu einer mehr oder weniger starken Verfestigung des Vlieses. Das Material durchläuft darüber hinaus keine weiteren Verfestigungsverfahren. Insbesondere kommen keine thermischen Verfestigungsverfahren zum Einsatz. Alternativ zu dem Kalandrieren können auch andere mechanische Verfahren eingesetzt werden.

Durch das Aufrauhen der Fasern während des Kardierens wird erreicht, daß das entstehende Faservlies, trotzdem es sich dabei um ein kreuzlagenorientiertes Vlies handelt, Eigenschaften eines Wirrfaser-Vlieses aufweist. Mit anderen Worten sind zwar die Fasern in dem Vlies in einer Vorzugsrichtung ausgerichtet. Sie sind jedoch teilweise auch willkürlich orientiert, wie bei einem Wirrfaser-Vlies, so daß eine Art Wirrfaserstruktur entsteht. Damit können die Vorteile eines Wirrfaser-Vlieses einerseits und eines faserorientierten Vlieses andererseits miteinander kombiniert werden, ohne daß es der Verwendung eines aufwendig herzustellenden und damit teuren mehrlagigen Fasermediums bedarf. Die Wirrlageneigenschaften werden nicht durch aerodynamische Vliesbildung hervorgerufen. Statt dessen wird eine rein mechanische Behandlung durchgeführt.

Durch die vorherige mechanische Behandlung, insbesondere das Kalandrieren, sind die Fasern des "unverfestigten Vliesstoffes" dynamisch fixiert. Das bedeutet zum einen, daß das Vliesmaterial zwar durch eine mechanische Behandlung gegenüber dem ursprünglichen Zustand verfestigt ist, wobei der Vliesstoff jedoch nicht den bislang üblichen Festigkeitsgrad aufweist. Das bedeutet aber zum anderen auch, daß die noch immer mehr oder weniger lose angeordneten Fasern bei einem Durchströmen des zu reinigenden Fluids dynamisch zur Seite ausweichen können. Hierauf beruht die Funktionsweise des "offenen" Filtermaterials. Nach einem Ausweichen der Fasern verbinden sich diese in ihrer neuen Position neu miteinander, so daß sich das Vliesmaterial neu formiert. Mit anderen Worten wird die innere Struktur des Filtermaterials während und aufgrund des Filtervorgangs ständig umgebildet. Zugleich wird die Bildung von ungewünschten Hohlräumen im Inneren des Filtermaterials während des Filtervorgangs, beispielsweise in Gestalt von Kanälen oder Taschen, durch welche die zu filternden Partikel ungewollt hindurchtreten könnten, wirkungsvoll vermieden. Eine besonders wirkungsvolle Filtrierung erfolgt auch deshalb, weil sich Schmutzpartikel auch in den durch das Aufrauhen der Oberfläche an den Fasern vorhandenen Taschen fangen. Im Ergebnis wird eine besonders gute Filterwirkung auf sehr einfache und damit preiswerte Art und Weise erreicht.

Nachfolgend wird der Aspekt der Form des Filtermaterials betrachtet, wobei davon ausgegangen wird, daß das Filtermaterial nicht in Blockform vorliegt, sondern in einer Ausführungsform der Erfindung aus dem Filtermaterial Filterkörper hergestellt werden, die als Schüttgut in einem Filterbehälter angeordnet sind. Anders ausgedrückt wird das Filtermedium durch eine Vielzahl von Filterkörpern bilden.

Die Mindestfaserlänge pro Filterkörper beträgt dabei vorzugsweise 1000 m. Je nach Anwendungsfall beträgt die Gesamtfaserlänge pro Filterkörper bis zu etwa 25000 m. Die Größe der Filterkörper, z. B. definiert durch Durchmesser und Länge eines Zylinders, durch einen Kugelradius oder aber durch die Längen der Achsen eines Ellipsoids, kann, u. a. in Abhängigkeit von der gewünschten Dichte des Vliesmaterials und von der Größe des zu befüllenden Filtergehäuses, variieren. Die erfindungsgemäßen Filterkörper weisen vorzugsweise Durchmesser in einem Bereich von etwa 20 mm bis beispielsweise etwa 30 cm auf. Beispielsweise werden aus einem Polymermaterial vergleichsweise kleine, annähernd kugelförmige Filterkörper mit einem Durchmesser von etwa 20 mm und einer Gesamtfaserlänge von etwa 1000 m hergestellt. Andere Filterkörper weisen beispielsweise ein Gewicht von etwa 12 Gramm und einen Radius von etwa 10 bis 15 cm auf.

Die Herstellung der erfindungsgemäßen Filterkörper ist auf verschiedene Art und Weise möglich. Beispielsweise kann die gewünschte Körperform mit Hilfe einer rotierenden Trommel erreicht werden. So kann ein im wesentlichen kreiszylinderförmiger Filterkörper beispielsweise dadurch hergestellt werden, daß ein in Band- oder Streifenform vorliegender Faservlieskörper aufgerollt wird, beispielsweise unter Verwendung eines Rollwerkzeuges, das sich relativ zu einem festen oder ebenfalls beweglichen Gegenwerkzeug bewegt. In diesem Fall bestimmt die Länge des verwendeten Vliesbandes oder -streifens und dessen Materialstärke den Durchmesser des Filterkörpers, und die Breite des Vliesbandes oder -streifens bestimmt die Länge des Filterkörpers entlang seiner Zylinderachse. In einer rotierenden Trommel kann der zunächst zylindrische Filterkörper so lange weiterbearbeitet werden, bis er annähernd eine ellipsoide oder Kugelform aufweist. Ebenso ist es möglich, eine Vlieslage durch eine Öse zu ziehen, abzulängen und zu rollen, um die gewünschte Form zu erhalten. Der Durchmesser der nach dem Ziehen durch die Öse faden- oder schnurförmigen Vlieslage bestimmt in diesem Fall den Durchmesser des späteren Filterkörpers, und die Länge des Filterkörpers wird durch das Ablängen bestimmt.

Nachfolgend wird ein Ausführungsbeispiel eines Filters näher beschrieben, wobei zunächst von der Verwendung eines herkömmlichen, blockförmigen Filtermediums ausgegangen wird.

Im Betrieb des Filters strömt das zu reinigende Fluid durch das aus dem erfindungsgemäßen Filtermaterial bestehende Filtermedium von der Einlaßseite zu der Auslaßseite, ohne daß es zu einem Zusetzen des Filters durch die Bildung eines Filterkuchens kommt.

Sammeln sich Schmutzteilchen an einer Stelle des Filtermediums, beispielsweise im Bereich des Fluideinlasses, dann ändert sich die Strömung derart, daß das Fluid den Strömungsweg mit dem geringen Strömungswiderstand wählt. Auch in diesem Fall durchläuft das Fluid jedoch den Filter in seiner gesamten Wirkungstiefe, so daß stets ein "dreidimensionaler" Filtereffekt eintritt. Zugleich kommt es bei ansteigendem Druck zu einem Wandern der Schmutzpartikel in den Filter hinein. Die Standzeit des Filters ist somit in erster Linie von seiner Wirkungstiefe abhängig, d. h. dem Mindestweg, den das Fluid von dem Fluideinlaß zu dem Fluidauslaß nehmen muß. Im Ergebnis verteilen sich die aufgefangenen Schmutzpartikel über das gesamte Filtermedium. Läßt die Filterwirkung nach, kann das Filtermedium aus dem Filter entnommen, gereinigt, beispielsweise gewaschen, und wieder verwendet werden.

Zur gewünschten Porosität des erfindungsgemäßen Vliesstoffes trägt bei, daß der durchschnittliche Abstand der Fasern mindestens der Korngröße der zu filternden Schmutzpartikel entspricht. Anders ausgedrückt ist der durchschnittliche Faserabstand, also die "Maschenweite" des Filtermediums, größer bzw. deutlich größer als die Filtratkörnung. Dies steht ganz im Gegensatz zu herkömmlichen Filtertechniken, bei denen stets besonders engmaschige Filtermedien zum Auffangen des Filtrats benutzt werden. Dennoch ist bei dem erfindungsgemäßen Vliesstoff wegen des "dreidimensionalen" Filtereffekts und gerade aufgrund der damit verbundenen Durchlässigkeit des Filtermediums eine effektive Filterung möglich.

Die obige Funktionsbeschreibung gilt entsprechend auch für den Fall, daß erfindungsgemäße Filterkörper als Filtermedium zum Einsatz kommen. Aufgrund der Porosität des "offenen" Filtermaterials und dessen sehr geringen Strömungswiderstandes ist in beiden Fällen ein nahezu druckloser Betrieb des Filters möglich. Lediglich ein sehr geringer Betriebsdruck zwischen etwa 5 mbar und etwa 50 mbar ist erforderlich. Als ganz besonders vorteilhaft hat sich ein Betriebsdruck zwischen etwa 5 mbar und etwa 15 mbar erwiesen, welcher für einen ordnungsgemäßen Betrieb des Filters ausreicht. Ein Betriebsdruck in der Größenordnung von höchstens 50 mbar gewährleistet zudem, daß das Faservlies nicht über einen Grenzwert hinaus komprimiert wird und die Dichte des Vliesstoffes von vorzugsweise 25 Gramm pro Liter nicht übersteigt bzw. daß die Filterkörper nicht über einen Grenzwert hinaus komprimiert werden.

Aufgrund des geringen Betriebsdrucks können wesentlich kleiner dimensionierte Pumpen verwendet werden. Hierdurch verringern sich die Anschaffungskosten für die Filteranlage. Zudem sinken gegenüber herkömmlichen Filteranlagen die Betriebskosten.

Bei der Verwendung der erfindungsgemäßen Filterkörper als Filtermedium eines Filters, z. B. in einem Schwimmbad, wird das herkömmliche Filtermedium, beispielsweise Sand, einfach durch die Filterkörper ersetzt. In Abhängigkeit u. a. von der Form des Filtergehäuses und der Funktionsweise des Filters, beispielsweise der Fließrichtung des zu reinigenden Fluids oder der Größe des Betriebsdrucks, kann es zur Optimierung der Filterleistung sinnvoll sein, die Filterkörper derart in dem Filtergehäuse anzuordnen, daß sie in dem Gehäuse verdichtet einliegen. Hierzu kann beispielsweise das Filtergehäuse mit den Filterkörpern überfüllt werden. Abschließend werden die Filterkörper so beaufschlagt, zum Beispiel durch das Schließen des Deckels des Filtergehäuses, daß die Filterkörper verdichtet in dem Filtergehäuse einliegen. Eine Überfüllung von ca. 25 bis 35 Prozent, auf das Volumen des Filtergehäuses bezogen, hat sich dabei als vorteilhaft erwiesen. Bei einer darüber hinausgehenden Befüllung und einer damit einhergehenden stärkeren Kompression verdichten sich die Filterkörper gegenseitig so stark, daß es zu einer unerwünschten Bildung von Filterkuchen kommt und die Filterwirkung spürbar nachläßt.

Zusammengefaßt wird mit der vorliegenden Erfindung die Verwendung eines Filtermaterials vorgeschlagen, welches vergleichsweise grobfaserig ist und besondere Oberflächeneigenschaften sowie eine geringe Dichte aufweist. Die Fasern sind untereinander dynamisch fixiert und bilden einen "unverfestigten Vliesstoff". Weiterhin wird die Anwendung des Filtermaterials zur Herstellung von Filterkörpern beschrieben, die nach Art von Schüttgut ein Filtermedium eines Filters bilden.

Alle in der Beschreibung und den nachfolgenden Ansprüchen angegebenen Merkmale können sowohl einzeln. als auch in beliebiger Kombination miteinander erfindungswesentlich sein.

## Patentansprüche

1. Filter zum Filtrieren eines Fluids mit einem in einem Gehäuse angeordneten Filtermedium, aufweisend einen Einlass für unreines Fluid am Gehäuse und einen Auslass für gereinigtes Fluid am Gehäuse, wobei das Filtermedium eine Vielzahl von Filterkörpern umfasst,
- wobei jeder der Filterkörper ein Filtermaterial aufweist, das aus einer Vielzahl synthetischer Fasern gebildet ist, wobei die fasereigene Haftung durch eine mechanische Behandlung verstärkt wird, wodurch das Material eine erhöhte Festigkeit erhält, und
- die geometrische Form des Filterkörpers zumindest näherungsweise einem Rotationskörper entspricht;
- **dadurch gekennzeichnet, dass** die Vielzahl von Filterkörpern als Schüttgut in dem Filtergehäuse angeordnet sind.

2. Filter nach Anspruch 1, wobei der Filterkörper eine Dichte von etwa 10 g/l bis etwa 100 g/l aufweist.

3. Filter nach einem der Ansprüche 1 oder 2, wobei die Fasern aus einem thermoplastischen Material, vorzugsweise aus einem Polymermaterial, hergestellt sind.

4. Filter nach einem der Ansprüche 1 bis 3, wobei die Fasern des Filterkörpers eine längenbezogene Masse zwischen etwa 1,7 dtex und etwa 45 dtex aufweisen.

5. Filter nach einem der Ansprüche 1 bis 4, wobei der Filterkörper in seinem Kern eine höhere Dichte aufweist, als seine den Kern umgebende Hülle aufweist.

6. Filter einem der Ansprüche 1 bis 5, wobei die Form des Filterkörpers näherungsweise zylinderförmig ist.

7. Filter nach einem der Ansprüche 1 bis 6, wobei die Form des Filterkörpers zumindest näherungsweise ellipsoid, insbesondere näherungsweise kugelförmig ist.

8. Verwendung eines Filtermediums zum Filtern eines Fluids in einem Gehäuse mit einem Einlass für unreines Fluid am Gehäuse und mit einem Auslass für gereinigtes Fluid am Gehäuse, wobei das Filtermedium eine Vielzahl von Filterkörpern umfasst,
- wobei jeder der Filterkörper ein Filtermaterial aufweist, das aus einer Vielzahl synthetischer Fasern gebildet ist, wobei die fasereigene Haftung durch eine mechanische Behandlung verstärkt wird, wodurch das Material eine erhöhte Festigkeit erhält, und
- die geometrische Form des Filterkörpers zumindest näherungsweise einem Rotationskörper entspricht
- **dadurch gekennzeichnet, dass** die Vielzahl von Filterkörpern als Schüttgut in dem Filtergehäuse angeordnet werden.

9. Verwendung nach Anspruch 8, wobei der Filter mit einem Betriebsdruck zwischen etwa 5 mbar und etwa 50 mbar, vorzugsweise zwischen etwa 5 mbar und etwa 15 mbar, betrieben wird.

10. Verfahren zum Filtrieren eine Fluids, aufweisend die folgenden Schritte:
- Anordnen eines Filtermediums mit einer Mehrzahl Filterkörper in einem Filtergehäuse mit einem Einlass für unreines Fluid am Gehäuse und mit einem Auslass für gereinigtes Fluid am Gehäuse; und
- Leiten eines Fluids nahezu drucklos durch das Filtermedium.

11. Verfahren nach Anspruch 10, ferner aufweisen den Schritt des Anlegens eines Betriebsdrucks von etwa 5 mbar bis etwa 15 mbar über den Einlass und den Auslass zum Filtrieren des Fluids.

12. Verfahren nach Anspruch 10, ferner aufweisen den Schritt des Anlegens eines Betriebsdrucks von etwa 5 mbar bis etwa 50 mbar über den Einlass und den Auslass zum Filtrieren des Fluids.

13. Verfahren nach einem der Ansprüche 10 bis 13, wobei die Filterkörper zusammenliegende Fasern aufweisen.

14. Verfahren nach Anspruch 12, wobei die Fasern dynamisch fixiert sind.

15. Verfahren nach Anspruch 12 oder 13, wobei die fasereigene Haftung durch eine mechanische Behandlung verstärkt wird, wodurch das Material eine erhöhte Festigkeit erhält.
